# EUROPÄISCHE PATENTSCHRIFT

(11) **EP 2 157 063 B1**
(45) Veröffentlichungstag und Bekanntmachung des Hinweises auf die Patenterteilung: **25.07.2012**
(21) Anmeldenummer: 09010380.5
(22) Anmeldetag: 12.08.2009
(51) Int. Cl.: C04B 26/28, E04B 1/82, E04B 1/84, C04B 20/00, C04B 26/22

(54) **Akustikputz**
Acoustic Render
Enduit Acoustique

(30) Priorität: 12.08.2008 DE 102008038623
(43) Veröffentlichungstag der Anmeldung: 24.02.2010
(73) Patentinhaber: Seiderer, Johann, 72138 Kirchentellinsfurt (DE)
(72) Erfinder: Seiderer, Johann, 72138 Kirchentellinsfurt (DE)
(74) Vertreter: Sacht-Gorny, Gudrun

(56) Entgegenhaltungen:
- WO-A1-95/30804
- WO-A1-98/27027
- DE-A1- 3 607 438
- DE-A1- 3 932 472
- DE-A1- 19 614 110
- JP-A- 2003 201 657

## Beschreibung

Die vorliegende Erfindung betrifft eine Ausgangsmischung für einen Akustikputz, einen Akustikputz, die Verwendung der Ausgangsmischung für einen Akustikputz sowie eine akustisch dämpfende Decken- und/oder Wandverkleidung.

Um die Raumakustik in Innenräumen zu verbessern, werden schallschluckende Wand- und/oder Deckenverkleidungen eingesetzt. Hierfür sind offenporige Strukturen erforderlich, die einen Durchtritt bzw. einen Eintritt der Schallwellen ermöglichen. So ist es beispielsweise bekannt, Raumdecken mit offenporigen Raumakustikplatten abzuhängen. Die Schallwellen treten in die Poren der Raumakustikplatte ein und werden in den Zwischenraum zwischen Raumakustikplatte und Decke weitergeleitet und verlaufen sich hier, sofern sie nicht bereits innerhalb der Raumakustikplatte verschluckt werden. Bei der Abhängung der Decke ist es erforderlich, einen Zwischenraum von mehreren cm, insbesondere zwischen 20 und 30 cm zwischen Raumakustikplatte und Raumdecke vorzusehen, um eine gute schallschluckende Wirkung zu erzielen. Ein solcher Zwischenraum ist jedoch bei Räumen mit niedriger Decke unter Umständen nicht möglich. Zudem ist auch in anderen Fällen eine Verringerung der Raumhöhe möglicherweise nicht gewünscht. Darüber hinaus ist das optische Erscheinungsbild von bekannten Raumakustikplatten oftmals nicht befriedigend, da die einzelnen Raumakustikplatten als solche erkennbar bleiben und sich ein monolithischer Gesamteindruck der Decke nur sehr schwer realisieren lässt. Eine weitere Beschichtung der Raumakustikplatten, zum Beispiel ein Anstrich, vermindert den schallschluckenden Effekt der Platten, da hierdurch die offenporige Struktur der Platten versiegelt würde. Das Aufbringen eines herkömmlichen Akustikputzes auf den Raumakustikplatten ist in der Regel auch nicht möglich. Ein herkömmlicher Akustikputz würde zwar eine offenporige Struktur gewährleisten. Zur Realisierung dieser Struktur sind in herkömmlichen Akustikputzen mineralische Komponenten, beispielsweise Silikatgestein mit entsprechender Körnung enthalten. Derartige Putze müssen mit erheblichem Druck auf den Untergrund aufgebracht werden, um eine Haftung zu ermöglichen. Ein derartiges Aufbringen auf eine Raumakustikplatte ist aufgrund deren offenporiger Struktur und der damit einhergehenden Instabilität nicht realisierbar, da bei der Aufbringung eines derartigen Putzes die Platte mechanisch zerstört werden würde.

Die deutsche Offenlegungsschrift DE 36 07 428 A1 beschreibt eine Außen- oder Innenwand, die mit einem Dünnputz und einer Schicht aus Natur- oder Kunststofffasern beschichtet ist. Diese Wand kann dekorativ beliebig gestaltet werden und ist schall- und wärmedämmend sowie feuchtigkeitsfegulierend und gegebenenfalls feuerhemmend. Die japanische Patentanmeldungsschrift JP 2003 201657 A beschreibt ein Material mit verschiedenen Faserfraktionen, das ebenfalls gute akustische Eigenschaften hat. Die internationale Patentanmeldungsschrift WO 95/30804 A1 hat ein Schallabsorptionssystem zum Gegenstand, das eine mit Fasern, vorzugsweise Baumwollfasern, beschichtete Mineralwollplatte umfasst. Die Baumwollfasern werden in einer Schichtdicke von 2 bis 3 mm auf die Platte aufgetragen. Auch diese beschichtete Platte hat schallabsorbierende Eigenschaften.

Die direkte Aufbringung eines herkömmlichen Akustikputzes mit geeigneter offenporiger Struktur, die in der Regel durch mineralische Komponenten erreicht wird, direkt auf der Wand oder der Decke erzielt nicht die schallschluckende Wirkung, wie sie beispielsweise bei einer abgehängten Decke erreicht wird. Darüber hinaus ist das optische Erscheinungsbild von herkömmlichen akustischen Putzen oftmals nicht befriedigend.

Die Erfindung stellt sich daher die Aufgabe, einen schallschluckenden Belag für Innenräume bereitzustellen, der hervorragende schallabsorbierende Eigenschaften aufweist und zudem den optischen und gestalterischen Anforderungen an einen Wand- oder Deckenbelag gerecht wird. Diese Aufgabe wird durch einen Akustikputz bzw. eine Ausgangsmischung für einen Akustikputz und eine akustisch dämpfende Decken- und/oder Wandverkleidung gelöst, wie sie in den unabhängigen Ansprüchen beschrieben sind. Bevorzugte Ausführungsformen sind in den abhängigen Ansprüchen ausgeführt.

Die erfindungsgemäße Ausgangsmischung für einen Akustikputz umfasst eine Binderkomponente und eine Naturfaserkomponente. Die Naturfaserkomponente setzt sich aus mehreren Fraktionen bzw. Anteilen der Naturfasern zusammen, wobei diese Fraktionen jeweils Fasern mit unterschiedlicher Faserlänge und Faserdicke enthalten. So enthält die Naturfaserkomponente eine Fraktion bzw. einen Anteil mit Feinstfasern, einen Anteil mit Feinfasern und einen Anteil mit Grobfasern. Hierbei fallen in den Anteil mit den Grobfasern zum Teil Fasern, die bereits als Garne bezeichnet werden könnten.

Die Feinstfasern sind Fasern mit einer Länge von circa 0,1 bis circa 5 mm. Die Feinfasern sind Fasern mit einer Länge von circa 0,1 bis circa 8 mm, insbesondere circa 0,5 bis circa 5 mm. Die Fraktion mit Grobfasern sind Fasern bzw. Garne mit einer Länge von circa 0,1 bis circa 8 mm, vorzugsweise circa 0,5 bis circa 5 mm. Die Dicke von Naturfasern kann sehr stark schwanken. Üblicherweise wird sie in dtex angegeben, das heißt in g/10000 m, wobei ein dtex als statistischer Wert circa einer Dicke von 10 µm entspricht. Erfindungsgemäß weisen die Feinstfasern eine Dicke von circa 1,2 bis circa 4,5 dtex auf. Die Feinfasern weisen eine Dicke von circa 3,3 bis circa 15 dtex auf, vorzugsweise von über 4,5 dtex bis 15 dtex. Die Grobfasern weisen eine Dicke von circa 10 bis circa 50 dtex auf, vorzugsweise von über 15 dtex bis 50 dtex. Diese Angaben sind im Rahmen der Erfindung so zu verstehen, dass geringe, zu vernachlässigende Menge von Ober- oder Unterkorn in den einzelnen Anteilen auftreten können.

Vorzugsweise bilden die Feinstfasern einen Anteil von circa 2 bis circa 25 Gewichtsprozent, vorzugsweise circa 10 bis circa 15 Gewichtsprozent, und insbesondere circa 12 Gewichtsprozent am gesamten Anteil der Naturfaserkomponente. Die Feinfasern bilden vorzugsweise einen Anteil von circa 15 bis circa 70 Gewichtsprozent, vorzugsweise circa 50 bis circa 60 Gewichtsprozent, und insbesondere circa 55 Gewichtsprozent am gesamten Anteil der Naturfaserkomponente. Vorzugsweise bilden die Grobfasern einen Anteil von circa 25 bis circa 50 Gewichtsprozent, vorzugsweise circa 30 bis circa 35 Gewichtsprozent, und insbesondere circa 33 Gewichtsprozent am Gesamtanteil der Naturfaserkomponente.

Die Ausgangsmischung ist in üblicher Weise insbesondere mit Wasser anzumischen. Die Masse wird in feuchtem Zustand auf eine Oberfläche aufgebracht, das heißt nass appliziert. Die Aufbringung des Putzes erfolgt mit üblichen Methoden, insbesondere durch Aufspritzen. Nach der Trocknung des Putzes hat sich eine Beschichtung gebildet, die sehr offenporig bzw. für Schall durchlässig ist und die ganz ausgezeichnete schallabsorbierende Eigenschaften aufweist. Vor allem im Bereich zwischen 300 und 4000 Hz kann der erfindungsgemäße Akustikputz eine erhebliche Raumschallreduzierung bewirken. Somit ist eine Anbringung des erfindungsgemäßen Akustikputzes insbesondere auf Wänden und Decken als raumakustische Maßnahme sehr vorteilhaft und kann beispielsweise in Schulen, Kindergärten, Büroräumen oder im Krankenhausbereich eingesetzt werden. Hinzu kommt, dass der Akustikputz auf der Basis von Naturstoffen hergestellt ist. Er ist damit auch im Hinblick auf gesundheitliche und ökologische Aspekte sehr vorteilhaft.

In einer besonders bevorzugten Ausführungsform der erfindungsgemäßen Ausgangsmischung für einen Akustikputz umfasst die Naturfaserkomponente Baumwollfasern. Baumwollfasern sind aufgrund ihrer Struktur für die schallabsorbierende Wirkung des Akustikputzes besonders geeignet. Zudem ist die Verwendung von Baumwollfasern auch für das optische Erscheinungsbild des Akustikputzes vorteilhaft, da sich hiermit eine optisch sehr ansprechende Oberflächenstruktur des Akustikputzes realisieren lässt. Die Baumwollfasern können in ungefärbtem Zustand für die Ausgangsmischung verwendet werden. Hierdurch wird bei ausschließlicher Verwendung von Baumwollfasern ein reinweißes Erscheinungsbild des Akustikputzes erreicht. In anderen Ausführungsformen können beliebig gefärbte Baumwollfasern oder Mischungen davon eingesetzt werden, wenn eine Farbgebung des Akustikputzes gewünscht ist.

In einer bevorzugten Ausführungsform werden ausschließlich Baumwollfasern in der Naturfaserkomponente eingesetzt. In anderen Ausführungsformen kann es vorgesehen sein, die Baumwollfasern mit anderen Naturfasern zu mischen oder ausschließlich andere Naturfasern zu verwenden. Besonders geeignet sind hierfür Viskose-, Sisal-, Jute-, Leinen-, Hanf-, Kokos- und/oder nichtlösliche Cellulosefasern. Auch diese weiteren Naturfasern sind abhängig von ihrer Struktur zur Verwendung in der Ausgangsmischung für einen Akustikputz geeignet und ermöglichen eine schallabsorbierende Wirkung des Akustikputzes. Darüber hinaus können diese Naturfaserkomponenten für die optische Erscheinung des Akustikputzes besondere Vorteile bringen. Beispielsweise eignet sich insbesondere Viskose zur Einbringung von Farbe in die Ausgangsmischung, da sich Viskose sehr gut färben lässt. Weiterhin kann durch diese weiteren Naturfasern die Textur und die Stabilität des Akustikputzes beeinflusst bzw. gesteuert werden. Besonders bevorzugt ist eine Mischung von Baumwollfasern und Viskosefasern.

Für die Bereitstellung der Naturfasern, insbesondere für die Bereitstellung von Baumwollfasern, werden vorzugsweise gewebte Stoffe zermahlen und fraktioniert, sodass die erforderlichen Faserlängen und Faserdicken erreicht werden. Das Zermahlen von bereits gewebten Stoffen hat gegenüber der Verwendung des Rohmaterials den Vorteil, dass beispielsweise die Baumwolle in gewebten Stoffen sich bereits entsprechend vorbehandelt und gewaschen ist, sodass bei einem Zermahlen von gewebten Stoffen sich jegliche weitere Vor- oder Aufbereitung der Fasern erübrigt. Die Verwendung von bereits gewebten Stoffen ist darüber hinaus auch aus ökonomischen Gesichtspunkten sehr vorteilhaft, da beispielsweise Abfallprodukte aus der Bekleidungsindustrie verwendet werden können.

Vorteilhafterweise bildet die Binderkomponente einen Gewichtsanteil von circa 12 bis circa 24 Gewichtsprozent am Gesamtgewicht der Ausgangsmischung. Besonders bevorzugt ist ein Anteil von circa 18 Gewichtsprozent, wobei der geeignete Gewichtsanteil der Binderkomponente vorzugsweise an die verwendete Naturfasermischung angepasst werden kann.

Vorzugsweise wird ein wasserlösliches Bindemittel eingesetzt. Besonders bevorzugt ist beispielsweise Stärke und/oder Methylcellulose. Besonders bevorzugt sind Mischungen von Stärke und Methylcellulose. Diese Bindemittel sind Naturprodukte und ökologisch und gesundheitlich völlig unbedenklich.

In bevorzugten Ausführungsformen umfasst die erfindungsgemäße Ausgangsmischung eine oder mehrere Effektkomponenten. Die Effektkomponenten beeinflussen vor allem die optische Erscheinung des Akustikputzes. Prinzipiell lassen sich alle streubaren Substanzen als Effektkomponente einsetzen. Besonders geeignet sind beispielsweise metallische Fäden und/oder Glimmerpartikel, die interessante optische Effekte in einem Akustikputz bewirken.

In einer besonders bevorzugten Ausführungsform der erfindungsgemäßen Ausgangsmischung für einen Akustikputz umfasst die Ausgangsmischung wenigstens eine funktionale Komponente. Hierbei kann es sich beispielsweise um ein Fungizid handeln. Insbesondere bei wärmegedämmten Häusern ist eine Pilzbelastung in den Wohnräumen oftmals ein Problem, sodass Fungizide in den Wand- und/oder Deckenbeschichtungen gewünscht werden. In besonders bevorzugter Weise werden als Fungizide für den Menschen ungiftige Substanzen eingesetzt, beispielsweise Borate. Als andere funktionale Komponente können in der erfindungsgemäßen Ausgangsmischung für einen Akustikputz beispielsweise ein oder mehrere Flammschutzmittel eingesetzt werden, die die Brennbarkeit des erfindungsgemäßen Akustikputzes vermindern.

Sollte eine Erneuerung oder Ausbesserung des Akustikputzes erforderlich sein, ist es ohne Weiteres möglich, eine neue Schicht des Akustikputzes unter Verwendung der beschriebenen Ausgangsmischung auf den bereits bestehenden Akustikputz aufzubringen. Hierbei verbindet sich die neue Schicht bei der Trocknung mit der alten Schicht, sodass die schallabsorbierende Wirkung des Akustikputzes in keiner Weise eingeschränkt wird und das gewünschte optische Erscheinungsbild wieder hergestellt wird. Auf diese Weise ist sowohl eine flächige bzw. vollständige Erneuerung des aufgebrachten Akustikputzes als auch eine punktuelle bzw. kleinflächige Ausbesserung ohne Weiteres möglich. Wenn es erforderlich sein sollte, den Akustikputz von einer Wand oder Decke zu entfernen, kann der Akustikputz mit ausreichend Wasser von der Wand gelöst und abgenommen werden.

Die Erfindung umfasst weiterhin einen Akustikputz, der mit einer Ausgangsmischung in der oben beschriebenen Art herstellbar ist. Die Ausgangsmischung für den Akustikputz wird in herkömmlicher Weise insbesondere mit Wasser per Hand oder maschinell aufgerührt und nass an Wand und/oder Decke oder geeigneten Wand- und/oder Deckenverkleidungen appliziert. Hierbei kann beispielsweise ein übliches Spritzverfahren eingesetzt werden. Bezüglich weiterer Merkmale der Ausgangsmischung für den Akustikputz wird auf die obige Beschreibung verwiesen.

Die Erfindung umfasst weiterhin die Verwendung der beschriebenen Ausgangsmischungen für einen Akustikputz zur Beschichtung einer Raumakustikplatte. Wie eingangs erwähnt, ist eine Beschichtung von üblichen Raumakustikplatten problematisch, da zum einen gewährleistet werden muss, dass durch die Beschichtung nicht die offenporige Struktur der Raumakustikplatte beeinträchtigt wird. Dies würde den schallabsorbierenden Effekt vermindern oder zerstören. Zum anderen ist eine Beschichtung mit üblichen Akustikputzen, die die offenporige Struktur der Raumakustikplatte erhalten würden, in der Regel nicht möglich, da herkömmliche Akustikputze mineralische Komponenten enthalten, die bei einem Aufspritzen des Akustikputzes die Struktur bzw. die Raumakustikplatte als solche zerstören würden. Aufgrund der Zusammensetzung und der Struktur des erfindungsgemäßen Akustikputzes ist es jedoch möglich, eine übliche Raumakustikplatte mit dem erfindungsgemäßen Akustikputz zu beschichten. Der erfindungsgemäße Akustikputz haftet ohne Weiteres auch bei einer vorsichtigen Auftragung mit wenig Druck auf der Raumakustikplatte, sodass die Raumakustikplatte als solche und die offenporige Struktur der Raumakustikplatte erhalten bleiben.

Die schallabsorbierenden Eigenschaften des erfindungsgemäßen Akustikputzes wirken mit den schallabsorbierenden Eigenschaften einer Raumakustikplatte, insbesondere einer abgehängten Raumakustikplatte, derart zusammen, dass der gesamte schallabsorbierende Effekt erheblich verstärkt wird. Mit besonderem Vorteil handelt es sich bei der Raumakustikplatte um eine offenporige Platte aus verpressten mineralischen Fasern, insbesondere aus Steinwolle. Derartige Raumakustikplatten allein erzielen ihren schallabsorbierenden Effekt in der Regel nur dann, wenn sie in abgehängtem Zustand mit ausreichendem Abstand zur Decke eingesetzt werden. Durch die Verstärkung des schallabsorbierenden Effekts durch Aufbringung bzw. Beschichtung der Raumakustikplatte mit dem erfindungsgemäßen Akustikputz kann eine erhebliche schallabsorbierende Wirkung bereits dann erreicht werden, wenn die Raumakustikplatte mit der Beschichtung direkt auf eine Wand oder Decke aufgebracht wird. Das hat den Vorteil, dass keine konstruktiv aufwendige Abhängung der Decke erforderlich ist. Die Raumakustikplatte kann direkt auf Decken oder Wände beispielsweise aufgeklebt werden und vorher oder nachher mit dem erfindungsgemäßen Akustikputz beschichtet werden. Neben den Vorteilen bei der Anbringung der raumakustischen Maßnahmen und der positiven optischen Erscheinung des erfindungsgemäßen Akustikputzes hat dieser Aspekt der Erfindung weiterhin den Vorteil, dass die Deckenhöhe nicht verringert werden muss.

Eine geeignete Raumakustikplatte weist beispielsweise eine Dicke von circa 1 cm bis circa 5 cm auf. Bevorzugt ist eine Dicke der Raumakustikplatte von circa 2 cm. Eine Dicke von circa 2 cm hat sich in der Vergangenheit als verhältnismäßig optimal im Hinblick auf die raumakustischen Eigenschaften erwiesen.

Die Erfindung umfasst schließlich eine akustisch dämpfende Decken- und/oder Wandverkleidung mit wenigstens einer Raumakustikplatte, die zumindest raumseitig mit einem Akustikputz in der oben beschriebenen Art beschichtet ist. Bei der Raumakustikplatte handelt es sich insbesondere um eine offenporige Platte aus verpressten mineralischen Fasern, insbesondere aus Steinwolle. Bezügliche weiterer Merkmale der akustisch dämpfenden Decken- und/oder Wandverkleidung bzw. weiterer Merkmale der Raumakustikplatte und des Akustikputzes wird auf die obige Beschreibung verwiesen.

Durch eine Beschichtung der Raumakustikplatte mit dem erfindungsgemäßen Akustikputz wird eine Stabilisierung der Raumakustikplatte erzielt. Daher kann es beispielsweise mit Vorteil vorgesehen sein, dass die Raumakustikplatte vor ihrer Anbringung an Decke und/oder Wand mit dem Akustikputz beschichtet wird. Durch die Stabilisierung der ansonsten eher empfindlichen Raumakustikplatte wird die Verarbeitung der Raumakustikplatte erleichtert. In anderen Ausführungsformen kann es vorgesehen sein, dass die Raumakustikplatte in unbeschichteter Form zunächst an Wand und/oder Decke angebracht wird, beispielsweise durch Verkleben und/oder Verschrauben. Anschließend wird der Akustikputz aufgebracht. Diese Reihenfolge hat den Vorteil, dass durch die Aufbringung des Akustikputzes sämtliche Stoßstellen zwischen einzelnen Akustikplatten mit dem Akustikputz abgedeckt werden können, sodass ein einheitliches Erscheinungsbild ohne sichtbare Übergänge zwischen einzelnen Akustikplatten erzielt wird.

Weitere Vorteile und Merkmale ergeben sich aus den nachfolgenden Beschreibungen von Ausführungsbeispielen. Hierfür können die einzelnen Merkmale jeweils für sich oder In Kombination miteinander verwirklicht sein.

Eine erfindungsgemäße Ausgangsmischung für einen Akustikputz kann beispielsweise die folgende Zusammensetzung enthalten: .

### Ausganosmischung für einen Akustikputz

| | |
|---|---|
| Binderkomponente: | 18 Gewichtsprozent eines Gemisches aus Methylcellulose und Stärke |
| Naturfaserkomponente: | 82 Gewichtsprozent einer Baumwollfasermischung |
| Baumwollfasermischung: | - 12 Gewichtsprozent Feinstfasern (1,2 dtex bis 4,5 dtex mit einer Länge von 0,1 bis 5 mm) |
| | - 55 Gewichtsprozent Feinfasern (über 4,5 dtex bis 15 dtex mit einer Länge von 0,5 bis 5 mm) |
| | - 33 Gewichtsprozent Grobfasern (über 15 dtex bis 50 dtex mit einer Länge von 0,5 bis 5 mm) |

Darüber hinaus können weitere Komponenten enthalten sein, beispielsweise eine oder mehrere Effektkomponenten, beispielsweise metallische Fäden und/oder Glimmerpartikel und/oder eine oder mehrere funktionale Komponenten, wie beispielsweise ein Fungizid, beispielsweise ein Borat, und/oder eine Substanz, die als Entflammbarkeitsschutz wirkt.

Circa 1,5 Kilogramm der Ausgangsmischung wird mit circa 10 Liter Wasser aufgerührt und mit einem üblichen Spritzverfahren, beispielsweise mit einer Putzpistole, einer Trichterspritzpistole, einer Putzpumpe oder einem Druckkessel durch eine geeignete Düse, beispielsweise eine Düse mit einem Durchmesser von circa 4 - 6 mm, auf den Untergrund aufgebracht. Diese Mischung ist für circa 5 m² einer Fläche ausreichend. Das Verhältnis von Ausgangsmischung und Wasser hängt in gewissem Maße von der Faserverteilung und damit von der Deckkraft des Putzes ab. Durch Variation der Öffnungsweite der Düse lässt sich die Oberflächenstruktur beeinflussen.

Der Akustikputz kann direkt auf eine Wand oder eine Decke aufgesprüht werden. In anderen Ausführungsformen kann der Akustikputz auf eine bzw. mehrere Raumakustikplatten aufgebracht werden, die beispielsweise bereits an einer Wand oder Decke angebracht sind. In anderen Ausführungsformen kann eine Raumakustikplatte vorab mit dem erfindungsgemäßen Akustikputz beschichtet und erst anschließend an einer Wand oder Decke angebracht werden.

Der erfindungsgemäße Akustikputz übt eine ganz erhebliche schallabsorbierende Wirkung aus. Insbesondere in Kombination mit einer Raumakustikplatte kann in einem Bereich von 500 Hz bis 4000 Hz ein Schallabsorptionsgrad von 0,8 bis 1,0 erzielt werden.

## Patentansprüche

1. Ausgangsmischung für einen Akustikputz, umfassend eine Binderkomponente und eine Naturfaserkomponente, wobei die Naturfaserkomponente
- einen Anteil Feinstfasern mit einer Länge von 0,1 bis 5 mm und mit einer Dicke von 1,2 dtex bis 4,5 dtex,
- einen Anteil Feinfasern mit einer Länge von 0,1 mm bis 8 mm und mit einer Dicke von über 4,5 dtex bis 15 dtex und
- einen Anteil Grobfasern mit einer Länge von 0,1 mm bis 8 mm und mit einer Dicke von über 15 dtex bis 50 dtex
enthält.

2. Ausgangsmischung für einen Akustikputz nach Anspruch 1, **dadurch gekennzeichnet, dass** die Feinstfasern einen Anteil von 2 bis 25 Gewichtsprozent, vorzugsweise 10 bis 15 Gewichtsprozent, insbesondere 12 Gewichtsprozent am Gesamtgewicht der Naturfaserkomponente bilden.

3. Ausgangsmischung für einen Akustikputz nach Anspruch 1 oder Anspruch 2, **dadurch gekennzeichnet, dass** die Feinfasern einen Anteil von 15 bis 70 Gewichtsprozent, vorzugsweise 50 bis 60 Gewichtsprozent, insbesondere 55 Gewichtsprozent am Gesamtgewicht der Naturfaserkomponente bilden.

4. Ausgangsmischung für einen Akustikputz nach einem der vorhergehenden Ansprüche, **dadurch gekennzeichnet, dass** die Grobfasern einen Anteil von 25 bis 50 Gewichtsprozent, vorzugsweise 30 bis 35 Gewichtsprozent, insbesondere 33 Gewichtsprozent, am Gesamtgewicht der Naturfaserkomponente bilden.

5. Ausgangsmischung für einen Akustikputz nach einem der vorhergehenden Ansprüche, **dadurch gekennzeichnet, dass** die Naturfaserkomponente Baumwollfasern umfasst.

6. Ausgangsmischung für einen Akustikputz nach einem der vorhergehenden Ansprüche, **dadurch gekennzeichnet, dass** die Naturfaserkomponente Viskose-, Sisal-, Jute-, Leinen-, Hanf-, Flachs-, Kokos- und/oder nichtlösliche Cellulosefasern umfasst.

7. Ausgangsmischung für einen Akustikputz nach einem der vorhergehenden Ansprüche, **dadurch gekennzeichnet, dass** die Binderkomponente einen Anteil von 12 bis 24 Gewichtsprozent, insbesondere 18 Gewichtsprozent, der Ausgangsmischung bildet.

8. Ausgangsmischung für einen Akustikputz nach einem der vorhergehenden Ansprüche, **dadurch gekennzeichnet, dass** die Binderkomponente Stärke und/oder Methylcellulose umfasst.

9. Ausgangsmischung für einen Akustikputz nach einem der vorhergehenden Ansprüche, **dadurch gekennzeichnet, dass** die Ausgangsmischung wenigstens eine Effektkomponente umfasst, wobei vorzugsweise die Effektkomponente metallische Fäden und/oder Glimmerpartikel umfasst.

10. Ausgangsmischung für einen Akustikputz nach einem der vorhergehenden Ansprüche, **dadurch gekennzeichnet, dass** die Ausgangsmischung wenigstens eine funktionale Komponente umfasst, wobei vorzugsweise die funktionale Komponente ein Fungizid, insbesondere ein Borat, und/oder einen Entflammbarkeitsschutz umfasst.

11. Akustikputz, enthaltend eine Ausgangsmischung gemäß einem der Ansprüche 1 bis 10 und Wasser.

12. Verwendung einer Ausgangsmischung für einen Akustikputz gemäß einem der Ansprüche 1 bis 10 zur Beschichtung einer Raumakustikplatte.

13. Verwendung nach Anspruch 12, **dadurch gekennzeichnet, dass** als Raumakustikplatte eine offenporige Platte aus verpressten mineralischen Fasern, insbesondere aus Steinwolle, eingesetzt wird.

14. Akustisch dämpfende Decken- und/oder Wandverkleidung, umfassend eine Raumakustikplatte, die zumindest raumseitig mit einem Akustikputz beschichtet ist, wobei der Akustikputz unter Verwendung einer Ausgangsmischung für einen Akustikputz gemäß einem der Ansprüche 1 bis 10 herstellbar ist.

15. Akustisch dämpfende Decken- und/oder Wandverkleidung nach Anspruch 14, **dadurch gekennzeichnet, dass** die Raumakustikplatte eine offenporige Platte aus verpressten mineralischen Fasern, insbesondere aus Steinwolle, ist.

## Claims

1. A starting mixture for an acoustic render, comprising a binder component and a natural fiber component, with the natural fiber component containing
- a fraction of ultra-fine fibers with a length of 0.1 to 5 mm and a thickness of 1.2 dtex to 4.5 dtex;
- a fraction of fine fibers with a length of 0.1 mm to 8 mm and a thickness of over 4.5 dtex to 15 dtex, and
- a fraction of coarse fibers with a length of 0.1 mm to 8 mm and a thickness of over 15 dtex to 50 dtex.

2. A starting mixture for an acoustic render according to claim 1, **characterized in that** the ultra-fine fibers form a fraction of 2 to 25 percent by weight, preferably 10 to 15 percent by weight, especially 12 percent by weight, of the total weight of the natural fiber component.

3. A starting mixture for an acoustic render according to claim 1 or claim 2, **characterized in that** the fine fibers form a fraction of 15 to 70 percent by weight, preferably 50 to 60 percent by weight, especially 55 percent by weight, of the total weight of the natural fiber component.

4. A starting mixture for an acoustic render according to one of the preceding claims, **characterized in that** the coarse fibers form a fraction of 25 to 50 percent by weight, preferably 30 to 35 percent by weight, especially 33 percent by weight, of the total weight of the natural fiber component.

5. A starting mixture for an acoustic render according to one of the preceding claims, **characterized in that** the natural fiber component comprises cotton fibers.

6. A starting mixture for an acoustic render according to one of the preceding claims, **characterized in that** the natural fiber component comprises viscose, sisal, jute, linen, hemp, flax, coconut and/or non-soluble cellulose fibers.

7. A starting mixture for an acoustic render according to one of the preceding claims, **characterized in that** the binder component forms a fraction of 12 to 24 percent by weight, especially 18 percent by weight, of the starting mixture.

8. A starting mixture for an acoustic render according to one of the preceding claims, **characterized in that** the binder component comprises starch and/or methyl cellulose.

9. A starting mixture for an acoustic render according to one of the preceding claims, **characterized in that** the starting mixture comprises at least one effect component, with preferably the effect component comprising metallic threads and/or mica particles.

10. A starting mixture for an acoustic render according to one of the preceding claims, **characterized in that** the starting mixture comprises at least one functional component, with preferably the functional component comprising a fungicide, especially a borate, and/or a flame retardant.

11. An acoustic render, containing a starting mixture according to one of the claims 1 to 10 and water.

12. The use of a starting mixture for an acoustic render according to one of the claims 1 to 10 for coating a room acoustic panel.

13. The use according to claim 12, **characterized in that** an open-pored panel made of pressed mineral fibers, especially rock wool, is used as a room acoustic panel.

14. An acoustically damping ceiling and/or wall covering, comprising a room acoustic panel which is coated at least on the room side with an acoustic render, with the acoustic render being producible by using a starting mixture for an acoustic render according to one of the claims 1 to 10.

15. An acoustically damping ceiling and/or wall covering according to claim 14, **characterized in that** the room acoustic panel is an open-pored panel made of pressed mineral fibers, especially rock wool.

## Revendications

1. Mélange initial pour un enduit acoustique comprenant un composant liant et un composant de fibres naturelles, dans lequel le composant de fibres naturelles comprend :
- une partie de fibres les plus fines d'une longueur de 0,1 à 5 mm et d'une épaisseur de plus de 1,2 dtex à 4,5 dtex,
- une partie de fibres fines d'une longueur de 0,1 mm à 8 mm et d'une épaisseur de plus de 4,5 dtex à 15 dtex, et
- une partie de fibres grossières d'une longueur de 0,1 mm à 8 mm et d'une épaisseur de plus de 15 dtex à 50 dtex.

2. Mélange initial pour un enduit acoustique selon la revendication 1,
**caractérisé en ce que**
les fibres les plus fines représentent une partie de 2 à 25 % en masse, de préférence 10 à 15 % en masse, en particulier 12 % en masse de la masse totale du composant de fibres naturelles.

3. Mélange initial pour un enduit acoustique selon la revendication 1 ou 2,
**caractérisé en ce que**
les fibres fines représentent une partie de 15 % à 70 % en masse, de préférence 50 à 60 % en masse, en particulier 55 % en masse de la masse totale du composant des fibres naturelles.

4. Mélange initial pour un enduit acoustique selon l'une des revendications précédentes,
**caractérisé en ce que**
les fibres grossières représentent une partie de 25 à 50 % en masse, de préférence 30 à 35 % en masse, en particulier 33 % en masse de la masse totale du composant de fibres naturelles.

5. Mélange initial pour un enduit acoustique selon l'une quelconque des revendications précédentes,
**caractérisé en ce que**
le composant de fibres naturelles comprend des fibres de coton.

6. Mélange initial pour un enduit acoustique selon l'une quelconque des revendications précédentes,
**caractérisé en ce que**
le composant de fibres naturelles comprend des fibres de viscose, sisal, jute, lin, chanvre, coco et/ou des fibres de cellulose non solubles.

7. Mélange initial pour un enduit acoustique selon l'une quelconque des revendications précédentes,
**caractérisé en ce que**
le composant liant représente une partie de 12 à 24 % en masse, en particulier 18 % en masse du mélange initial.

8. Mélange initial pour un enduit acoustique selon l'une quelconque des revendications précédentes,
**caractérisé en ce que**
le composant liant comprend de l'amidon et/ou de la méthylcellulose.

9. Mélange initial pour un enduit acoustique selon l'une quelconque des revendications précédentes,
**caractérisé en ce que**
le mélange initial comprend au moins un composant à effet comprenant avantageusement des fils métalliques et/ou des particules de mica.

10. Mélange initial pour un enduit acoustique selon l'une quelconque des revendications précédentes,
**caractérisé en ce que**
le mélange initial comprend au moins un composant fonctionnel qui est de préférence un fongicide, en particulier un borate, et/ou un agent d'ininflammabilité.

11. Enduit acoustique comprenant un mélange initial selon l'une des revendications 1 à 10 et de l'eau.

12. Utilisation d'un mélange initial pour un enduit acoustique selon l'une des revendications précédentes 1 à 10 pour enduire une plaque d'insonorisation de locaux.

13. Utilisation d'un mélange initial selon la revendication 12,
**caractérisée en ce qu'**
on utilise comme plaque d'insonorisation de locaux une plaque à pores ouverts, en fibre minérales compressées, en particulier de la laine minérale.

14. Habillage d'amortissement acoustique pour l'isolation acoustique de plafonds et/ou de murs comprenant une plaque d'insonorisation de locaux recouverte au moins du côté tourné vers l'intérieur du local avec un enduit acoustique réalisé à partir d'un mélange initial pour enduit acoustique selon l'une des revendications 1 à 10.

15. Habillage selon la revendication 14,
**caractérisé en ce que**
la plaque d'insonorisation de locaux est une plaque à pores ouverts en fibres minérales compressées, en particulier en laine de verre.
